# EUROPÄISCHE PATENTSCHRIFT

(11) **EP 2 420 430 B1**
(45) Veröffentlichungstag und Bekanntmachung des Hinweises auf die Patenterteilung: **02.12.2015**
(21) Anmeldenummer: 11006303.9
(22) Anmeldetag: 30.07.2011
(51) Int. Cl.: B62D 5/093, B62D 5/097

(54) **Hydraulische Lenkeinrichtung**
Hydraulic steering device
Dispositif de direction hydraulique

(30) Priorität: 20.08.2010 DE 102010039554
(43) Veröffentlichungstag der Anmeldung: 22.02.2012
(73) Patentinhaber: Hydraulik Nord Fluidtechnik GmbH & Co. KG, 19370 Parchim (DE)
(72) Erfinder: Bergmann, Erhard, Dr., 19079 Mirow (DE); Schildmann, Manfred, 19372 Karrenzin (DE); Voss, Gerhard, 19370 Parchim (DE)
(74) Vertreter: Gulde & Partner

(56) Entgegenhaltungen:
- WO-A1-2008/069552
- DE-A1-102006 010 695

## Beschreibung

Die Erfindung betrifft eine hydraulische Lenkeinrichtung mit den im Oberbegriff des Anspruchs 1 genannten Merkmalen.

Hydraulische Lenkeinrichtungen der gattungsgemäßen Art sind bekannt. Diese werden üblicherweise in mobilen hydraulischen Anlagen, insbesondere in langsam fahrenden Fahrzeugen eingesetzt.

DE 10 2006 010695 A1 beschreibt eine gattungsgemässe Hydraulische Lenkeinrichtung mit Übersetzungsänderung, die ein Steuerventil und eine Dosierpumpe mit mehreren Verdrängerkammern umfasst, wobei das Steuerventil einen von einem Lenkrad ansteuerbaren Steuerkolben und eine mit einem Rotor der Dosierpumpe mechanisch verbundenen Steuerhülse besitzt, der Steuerkolben und die Steuerhülse mit Kanälen ausgestattet sind, die miteinander und der Dosierpumpe korrespondieren sowie die Verdrängerkammern der Dosierpumpe über eine Zulaufleitung mit mehreren parallelen Zulaufdrosseln mit einem Lenkzylinder und den Lenkzylinder über eine Rücklaufleitung mit mehreren parallelen Rücklaufdrosseln mit einem Rücklaufanschluss verbinden.

Die hydraulischen Lenkeinrichtungen bestehen aus einem Gehäuse mit einem Zulaufanschluss für eine Versorgungspumpe, einem Ablaufanschluss für einen Tank und zwei richtungswechselnden Anschlüssen für den Zulauf zu einem Lenkzylinder und den Rücklauf von dem Lenkzylinder. Im Gehäuse ist ein Drehschiebersteuerventil und eine nach dem Orbitprinzip arbeitende Dosierpumpe untergebracht, wobei die Dosierpumpe aus einem feststehenden Außenring mit beispielsweise sieben Innenzähnen und einem drehenden Läuferzahnrad mit sechs Außenzähnen besteht. Das Drehschiebersteuerventil wird aus einer äußeren, im Gehäuse eingepassten Steuerhülse und einem inneren, konzentrisch zur Steuerhülse angeordneten Steuerkolben gebildet, die beide gegen die Kraft einer Feder relativ zueinander drehbar sind. Hierbei ist der Steuerkolben einerseits mechanisch mit einem Lenkrad und die Steuerhülse andererseits mechanisch mit dem Läuferzahnrad der Dosierpumpe verbunden. Zwischen dem Drehschiebersteuerventil und der Dosierpumpe besteht über Kommutatorenkanäle eine hydraulische Verbindung.

Diese Lenkeinrichtung arbeitet mit der Unterstützung der Versorgungspumpe im Servobetrieb und bei Ausfall der Versorgungspumpe im Notbetrieb, bei dem der erforderliche Druck in der Lenkeinrichtung allein durch die Handkraft am Lenkrad erzeugt wird.

Um eine Betätigung der hydraulischen Lenkeinrichtung in einem derartigen Fall zu vereinfachen, das heißt die aufzubringende Handkraft zu verringern, ist bekannt, eine hydraulische Lenkeinrichtung mit einer Übersetzungsänderung vorzusehen. Eine derartige hydraulische Lenkeinrichtung ist aus EP 0 746 492 B1 bekannt. Hier ist vorgesehen, dass die Dosierpumpe über drei parallele Zulaufleitungen, die konstruktiv in einer ersten radialen Ebene angeordnet sind, direkt mit dem Lenkzylinder verbunden ist. Die restlichen drei parallelen Zulaufleitungen zwischen der Dosierpumpe und dem Lenkzylinder sind konstruktiv in einer zweiten radialen Ebene angeordnet und besitzen jeweils ein in Richtung zum Lenkzylinder offenes Rückschlagventil. In einer bevorzugten Ausführungsform dieser bekannten Lenkeinrichtung ist an der Stelle der drei einzelnen Rückschlagventile ein gemeinsames, für alle drei Zulaufleitungen der zweiten radialen Ebene wirksames Rückschlagventil vorgesehen, das mit einer Umschalteinheit verbunden ist. Diese Umschalteinheit wird einerseits vom Druck vor den Eingangsdrosseln der Lenkeinrichtung und andererseits vom Druck der drei parallelen Zulaufleitungen der zweiten radialen Ebene gesteuert. Dadurch nimmt die Umschalteinheit im Servobetrieb, wenn also vor den Eingangsdrosseln ein größerer Druck als in der zweiten radialen Ebene herrscht, eine erste Stellung ein, in der alle sechs Zulaufleitungen beider radialen Ebenen an der Versorgung des Lenkzylinders beteiligt sind. In einem Notlenkbetrieb, also wenn kein Druck vor den Eingangsdrosseln anliegt, nimmt die Umschalteinheit durch den jetzt höheren Druck in der zweiten radialen Ebene eine zweite Stellung ein, in der die drei Zulaufleitungen der zweiten radialen Ebene mit der zur Dosierpumpe führenden und Unterdruck aufweisenden Zulaufleitung oder mit der zum Tank führenden Rücklaufleitung verbunden sind. Damit sind nur die drei in der ersten radialen Ebene befindlichen Zulaufleitungen an der Versorgung des Lenkzylinders beteiligt.

Durch das verringerte Verdrängungsvolumen wird zwangsläufig die Anzahl der notwendigen Drehungen am Lenkrad zum Erreichen eines bestimmten Einschlagwinkels der gelenkten Räder höher, aber die erforderliche Lenkkraft wird gegenüber einer herkömmlichen Lenkung annähernd halbiert und damit vom Fahrzeugführer besser beherrschbar.

Die Rücklaufleitungen zwischen dem Lenkzylinder und der Dosierpumpe sind wie die Zulaufleitungen konstruktiv in zwei radialen Ebenen angeordnet, wobei die Rücklaufleitungen der zweiten radialen Ebene wieder durch ein gemeinsames und umschaltbares Rückschlagventil abgetrennt sind und der gesamte Rücklaufstrom über die verbleibenden Rücklaufleitungen in der ersten Ebene geführt wird.

In bestimmten Betriebssituationen, insbesondere bei einer Neutralstellung der hydraulischen Lenkung im Servobetrieb nach einer hohen Druckbelastung, kann es durch ein so genanntes eingekammertes Volumen der Hydraulik-Flüssigkeit, das an der Umschalteinheit wirkt, zu hochfrequenten Geräuschen kommen.

Der Erfindung liegt daher die Aufgabe zugrunde, eine hydraulische Lenkeinrichtung der gattungsgemäßen Art zu schaffen, bei der ein Auftreten von hochfrequenten Geräuschen in einer Neutralstellung der Lenkeinrichtung vermieden wird.

Erfindungsgemäß wird diese Aufgabe mittels einer hydraulischen Lenkeinrichtung mit den im Anspruch 1 genannten Merkmalen gelöst. Dadurch, dass eine Fluidverbindung zwischen der Steuerhülse und der Umschalteinrichtung mindestens eine Druckentlastungsverbindung zu einem Tankanschluss aufweist, wird vorteilhaft erreicht, dass diese Fluidverbindung in Neutralstellung der hydraulischen Lenkeinrichtung entlastet wird, so dass das in dieser Fluidverbindung vorhandene eingekammerte Volumen unmittelbar nach einer hohen Druckbelastung die Umschalteinheit nicht zum Schwingen anregen kann. Hierdurch können die von diesen Schwingungen ausgehenden hochfrequenten Geräusche vermieden werden. Insbesondere bei einem Lenken gegen Anschlag und anschließendem Loslassen des Lenkrades, wo es zu besonders hohen Druckbelastungen kommt, wird das Entstehen von wahrnehmbaren hochfrequenten Geräuschen sicher vermieden.

In bevorzugter Ausgestaltung der Erfindung ist vorgesehen, dass die Druckentlastungsverbindung von einer Verbindung zwischen einem Kanal der Steuerhülse, in dem der Druck der drei parallelen Zulaufleitungen der zweiten radialen Ebene wirkt (Abschaltkanal) und einem Ablaufschlitz des Steuerkolbens gebildet ist. Hierdurch ist in besonders einfacher Weise möglich, die Druckentlastungsverbindung in das Drehschiebersteuerventil zu integrieren. Zusätzlicher Bauraum und zusätzliche Steuerkanäle werden nicht benötigt.

Darüber hinaus ist in bevorzugter Ausgestaltung der Erfindung vorgesehen, dass der Abschaltkanal eine Bohrung aufweist, die über einen Schlitz des Steuerkolbens in Verbindung mit dem Ablaufschlitz steht. Hierdurch lässt sich in besonders einfacher Weise eine definierte Druckentlastung erzeugen. Durch eine definierte Dimensionierung der Bohrung und des Schlitzes ist eine Entlastung auf den maximal möglichen Druckanstieg in der Fluidverbindung in der Steuerhülse und der Umschalteinrichtung möglich, so dass die Druckentlastung in einer Zeitspanne eintritt, die sicher ein Schwingen der Umschalteinheit vermeidet.

Weiterhin kann gewährleistet werden, dass zu Beginn eines erneuten Lenkvorganges diese Verbindung wieder aufgehoben wird.

Erfindungsgemäß ist weiterhin vorgesehen, dass die Umschalteinrichtung pneumatische, elektrische, elektromagnetische oder mechanische Verstelleinheiten umfasst. Wichtig ist, dass unabhängig von der konkreten Ausgestaltung der Umschalteinrichtung die Fluidverbindung zu der Umschalteinrichtung in Neutralstellung der hydraulischen Lenkeinrichtung entlastet wird.

Die Erfindung wird nachfolgend in einem Ausführungsbeispiel anhand der zugehörigen Zeichnungen näher erläutert. Es zeigen:
- Figur 1: ein Blockschaltbild einer hydraulischen Lenkeinrichtung und
- Figur 2: eine Abwicklung eines Drehschiebersteuerventils der Lenkeinrichtung in einer Neutralstellung.

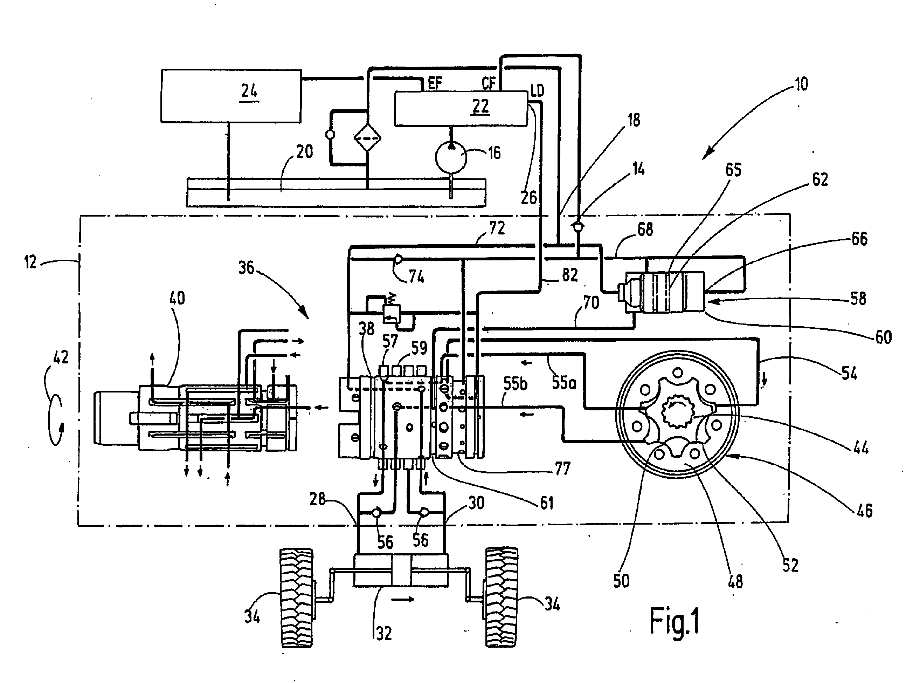

Figur 1 zeigt schematisch in einem Blockschaltbild eine hydraulische Lenkeinrichtung 10. Die Lenkeinrichtung 10 umfasst ein Gehäuse 12, das über einen Zulaufanschluss 14 mit einer Versorgungspumpe 16 sowie einen Ablaufanschluss 18 mit einem Tank 20 verbunden ist. Zwischen Zulaufanschluss 14 und Versorgungspumpe 16 ist in diesem Beispiel ein Prioritätsventil 22 angeordnet, mittels dem ein Versorgungsbetrieb der Versorgungspumpe 16 zwischen einer Arbeitshydraulik 24 und der hydraulischen Lenkeinrichtung 10 gesteuert werden kann. Über einen Lastanschluss 26 wird bei Anforderung durch die hydraulische Lenkeinrichtung 10 diese Priorität vor der Arbeitshydraulik 24 zugeordnet.

Das Gehäuse 12 umfasst ferner zwei richtungswechselnde Anschlüsse 28 und 30, die als Zulauf beziehungsweise Rücklauf zu einem Lenkzylinder 32 dienen. Je nach Lenkrichtung - links oder rechts - ist der Anschluss 28 Zulauf beziehungsweise Rücklauf und der Anschluss 30 Rücklauf beziehungsweise Zulauf. Der Lenkzylinder 32 wirkt auf hier angedeutete lenkbare Räder 34 eines Fahrzeuges.

Innerhalb des Gehäuses 12 ist ein Drehschiebersteuerventil 36 angeordnet, das eine in einen entsprechenden Innenraum des Gehäuses 12 eingepasste Steuerhülse 38 und einen innerhalb der Steuerhülse 38 konzentrisch zu der Steuerhülse 38 angeordneten Steuerkolben 40 umfasst. Aufgrund der Übersichtlichkeit ist hier der Steuerkolben 40 in Explosivdarstellung außerhalb der Steuerhülse 38 dargestellt. Der Steuerkolben 40 ist mechanisch mit einem hier nicht dargestellten, aber durch den Drehrichtungspfeil 42 symbolisierten Lenkrad verbunden. Die Steuerhülse 38 ist mechanisch mit einem Läuferzahnrad 44 einer Dosierpumpe 46 verbunden. Die Dosierpumpe 46 arbeitet nach dem so genannten Orbitprinzip, das heißt, diese umfasst einen feststehenden Außenring 48 mit beispielsweise sieben Innenzähnen 50 und einem drehbaren Läuferzahnrad 44 mit dann sechs Außenzähnen 52.

Zwischen dem Drehschiebersteuerventil 36 und der Dosierpumpe 46 besteht über Kommutatorenkanäle 54 und 55 eine hydraulische Verbindung.

Die Kommutatorenkanäle 55a und 55b münden in zwei radiale Ebenen. Eine erste radiale Ebene 57 - gemäß der Darstellung in Figur 1 - gestattet eine Verbindung der Dosierpumpe 46 über drei parallele Zulaufleitungen und den Anschluss für Linksdrehung 28 direkt mit dem Lenkzylinder 32. Die übrigen drei parallelen Zulaufleitungen zwischen der Dosierpumpe 46 und dem Lenkzylinder 32 sind in der zweiten radialen Ebene 59 - gemäß Figur 1 - angeordnet und sind über das in Richtung des Lenkzylinders 32 offene Rückschlagventil 56L mit dem Lenkzylinder 32 verbunden.

Die Lenkeinrichtung 10 umfasst ferner eine Umschalteinheit 58, die gemäß dem nachstehenden Ausführungsbeispiel von einem hydraulischen Ventil 60 gebildet ist. Ein Ventilkolben 62 ist innerhalb einer Ventilbohrung 64 längsverschieblich gelagert. Ein Steueranschluss 66 des Ventils 60 ist mit einem Druck beaufschlagt, der vor Eingangsdrosseln 76 der hydraulischen Lenkeinrichtung 10 abgegriffen wird. Eine entsprechende Verbindungsleitung 68 verbindet den Steueranschluss 66 mit dem entsprechenden Druckniveau.

Das Ventil 60 ist über eine weitere Verbindungsleitung 70 mit einem Abschaltkanal 61 verbunden. Eine weitere Verbindungsleitung 72 verbindet das Steuerventil 60 mit dem Tank 20. Die Verbindungsleitungen 68 und 72 sind über ein in Richtung der Verbindungsleitung 72 sperrendes Rückschlagventil 74 verbunden.

Der Aufbau und die Funktion der in Figur 1 gezeigten hydraulischen Lenkeinrichtung 10 sind allgemein bekannt. Hierzu wird beispielsweise auf den Offenbarungsgehalt von EP 0 746 492 B1 und EP 1 429 954 B1 verwiesen.

Bei der dargestellten hydraulischen Lenkeinrichtung 10 handelt es sich um eine Lenkeinrichtung mit Übersetzungsänderung, das heißt, bei Ausfall der den Servobetrieb bestimmenden Versorgungspumpe 16 erfolgt ein Umschalten mittels der Umschalteinheit 58 auf einen Notbetrieb, bei dem die Lenkung ausschließlich über das Lenkrad (42) erfolgt.

In Figur 1 ist der Servobetrieb während einer normalen Linkslenkung dargestellt. Hieraus ergeben sich die in Figur 1 dargestellten Fluidströme entsprechend den gezeigten Pfeilrichtungen.

Der Ventilkolben 62 des Ventils 60 befindet sich in einer ersten Stellung, die dem normalen Servobetrieb entspricht. Über den am Steueranschluss 66 anliegenden Eingangsdruck wird der Ventilkolben 62 nach links gedrängt, so dass eine Verbindung zwischen den Verbindungsleitungen 70 und 72 durch den Ventilkolben 62 gesperrt ist. Fällt die Versorgungspumpe 16 aus, sinkt der Druck am Steueranschluss 66, so dass der Ventilkolben 62 durch den über die Verbindungsleitung 70 anliegenden Druck öffnet, so dass eine Verbindung zwischen der Verbindungsleitung 70 und der Verbindungsleitung 72 öffnet. Hierdurch erfolgt in bekannter Weise eine Abschaltung von drei Kammern der Dosierpumpe 46, so dass diese mit geringer Handkraft durch das Lenkrad 42 dann mit der Hälfte der aktiven Kammern betrieben werden kann.

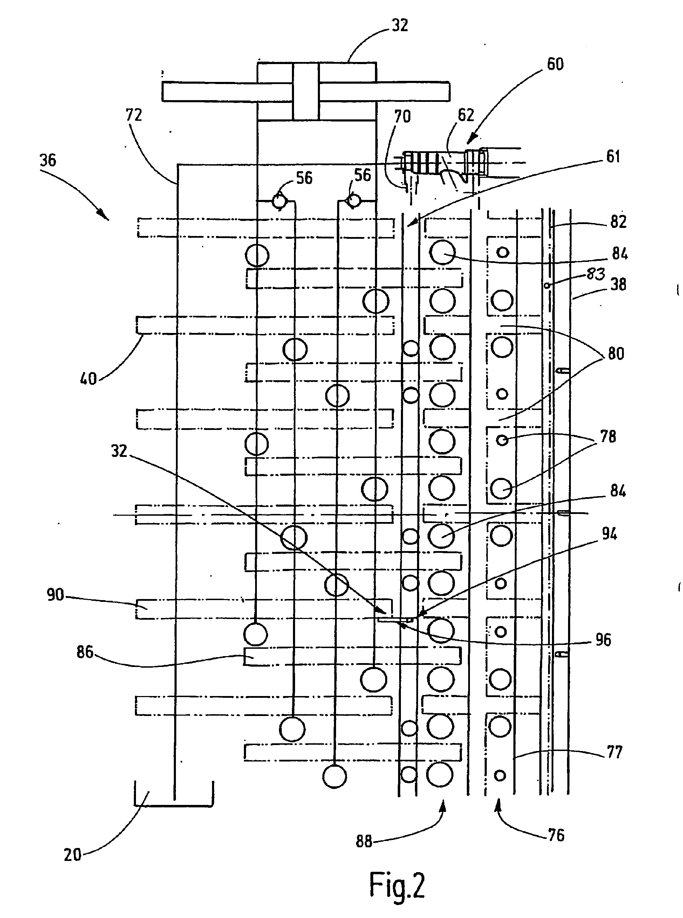

Figur 2 zeigt eine schematische Abwicklung der Steuerhülse 38 und des Steuerkolbens 40, wobei hier die erfindungswesentliche Ausgestaltung der hydraulischen Lenkeinrichtung 10 verdeutlicht wird.

Dargestellt ist in einer strichpunktierten Linie der Steuerkolben 40 und in einer durchgezogenen Linie die Steuerhülse 38. Das Drehschiebersteuerventil 36 umfasst eine Eingangsdrossel 76, die in der radialen Ebene eines Kanals 77 liegt. Die Eingangsdrossel 76 umfasst durchmessergestaffelte Eingangbohrungen 78 in der Steuerhülse 38 und axiale Eingangsschlitze 80 im Steuerkolben 40. Über die Verbindungsleitung 82 und die Verbindungsbohrung 83 sind die Eingangsschlitze 80 mit dem Lastanschluss 26 (Figur 1) des Prioritätsventils 22 verbunden.

Der in einer anderen radialen Ebene liegende Abschaltkanal 61 ist über die hier angedeutete Verbindungsleitung 70 mit dem Ventil 60 verbunden.

Das Drehschiebersteuerventil 36 umfasst ferner in einer weiteren Ebene befindliche zwölf Kommutatorbohrungen 84 innerhalb der Steuerhülse 38, die sowohl mit sechs axialen Zulaufschlitzen 86 im Steuerkolben 40 als auch mit sechs axialen Eingangsschlitzen 80 eine Kommutatordrossel 88 bilden.

Der Steuerkolben 40 umfasst ferner hier angedeutete Ablaufschlitze 90, die eine Verbindung des Drehschiebersteuerventils 36 zum Tank 20 bei entsprechender Stellung der Steuerhülse 38 gestatten.

Der Abschaltkanal 61 ist über eine Druckentlastungsverbindung 92 mit einem der Ablaufschlitze 90 verbunden. Diese Druckentlastungsverbindung 92 wird über eine Bohrung 94 in der Steuerhülse 38 und einen Schlitz 96 im Steuerkolben 40 erzielt.

Diese Druckentlastungsverbindung 92 sorgt dafür, dass in Neutralstellung, insbesondere nach einem Druckaufbau, der im Abschaltkanal 61 sowie der Verbindungsleitung 70 am Ventil 60 anliegende hohe Druck sich abbauen kann. Dies verhindert ein Schwingen des Ventilkolbens 62 gegen den in der Verbindungsleitung 70 anliegenden Steuerdruck. Somit können die damit verbundenen hochfrequenten Geräusche gar nicht erst entstehen.

## Patentansprüche

1. Hydraulische Lenkeinrichtung (10) mit Übersetzungsänderung, die ein Steuerventil und eine Dosierpumpe (46) mit mehreren Verdrängerkammern umfasst, wobei das Steuerventil einen von einem Lenkrad (42) ansteuerbaren Steuerkolben (40) und eine mit einem Rotor der Dosierpumpe (46) mechanisch verbundenen Steuerhülse (38) besitzt, der Steuerkolben (40) und die Steuerhülse (38) mit Kanälen ausgestattet sind, die miteinander und der Dosierpumpe (46) korrespondieren sowie die Verdrängerkammern der Dosierpumpe (46) über eine Zulaufleitung mit mehreren parallelen Zulaufdrosseln mit einem Lenkzylinder (32) und den Lenkzylinder (32) über eine Rücklaufleitung mit mehreren parallelen Rücklaufdrosseln mit einem Rücklaufanschluss verbinden, wobei im Servolenkbetrieb mindestens eine Ebene der Zulaufdrosseln ständig mit dem Lenkzylinder (32) in Verbindung steht und eine weitere Ebene der Zulaufdrosseln mittels einer von der Druckdifferenz vor und nach der Dosierpumpe (46) steuerbaren Umschalteinheit (58) mit einem einer Versorgungspumpe (16) verbundenen Zulaufanschluss (14) oder einem einem Tank (20) verbundenen Ablaufanschluss (18) verbindbar sind,
**dadurch gekennzeichnet, dass**
eine Fluidverbindung (70) zwischen der Steuerhülse (38) und der Umschalteinheit (58) mindestens eine Druckentlastungsverbindung (92) zu einem Tankanschluss (18) aufweist.

2. Hydraulische Lenkeinrichtung nach Anspruch 1,
**dadurch gekennzeichnet, dass**
die Druckentlastungsverbindung (92) von einer Verbindung zwischen einem Abschaltkanal (61) der Steuerhülse (38) und einem Ablaufschlitz (90) des Steuerkolbens (40) gebildet ist.

3. Hydraulische Lenkeinrichtung nach Anspruch 2,
**dadurch gekennzeichnet, dass**
der Abschaltkanal (61) eine Bohrung (94) aufweist, die über einen Schlitz (96) des Steuerkolbens (40) in Verbindung mit dem Ablaufschlitz (90) steht.

4. Hydraulische Lenkeinrichtung nach Anspruch 3,
**dadurch gekennzeichnet, dass**
die Umschalteinrichtung (58) pneumatische, elektrische, elektromagnetische oder mechanische Verstelleinheiten umfasst.

## Claims

1. A hydraulic steering device (10) with translation ratio, which comprises a control valve and a metering pump (46) with a plurality of displacement chambers, wherein the control valve includes a control piston (40), controllable by a steering wheel (42), and a control sleeve (38), mechanically connected to a rotor of the metering pump (46), wherein the control piston (40) and the control sleeve (38) are furnished with channels which cooperate and communicate with each other and with the metering pump (46), and which connect the displacement chambers of the metering pump (46) via a feed line having a plurality of parallel feed throttles with a steering cylinder (32) and connect the steering cylinder (32) via a return line with a plurality of parallel return throttles having a return connector, wherein, in servo steering operation, at least one level of the feed throttles is constantly connected to the steering cylinder (32) and a further level of the feed throttles can be connected by means of a switching unit (58), controllable by the pressure difference upstream and downstream of the metering pump (46), with a feed connector (14) which is connected to a supply pump (16), or a discharge connector (18) which is connected to a tank (20),
**characterized in that**
a fluid connection (70) between the control sleeve (38) and the switching unit (58) comprises at least one pressure relief connection (92) to a tank connection (18).

2. The hydraulic steering device according to Claim 1,
**characterized in that**
the pressure relief connection (92) is formed by a connection between a disconnecting channel (61) of the control sleeve (38) and a discharge slot (90) of the control piston (40).

3. The hydraulic steering device according to Claim 2,
**characterized in that**
the disconnecting channel (61) comprises a bore (94) which is connected via a slot (96) of the control piston (40) with the discharge slot (90).

4. The hydraulic steering device according to Claim 3,
**characterized in that**
the switching device (58) comprises pneumatic, electrical, electromagnetic or mechanical adjustment units.

## Revendications

1. Dispositif de direction hydraulique (10) à variation de transmission, comprenant une soupape de commande et une pompe de dosage (46) à plusieurs chambres de déplacement, la soupape de commande étant pourvue d'un piston de commande (40) pouvant être commandé par un volant de direction (42) et d'un manchon de commande (38) relié mécaniquement à un rotor de la pompe de dosage (46), le piston de commande (40) et le manchon de commande (38) présentant des canaux correspondant les uns aux autres et à la pompe de dosage (46), et reliant à un cylindre de direction (32) les chambres de déplacement de la pompe de dosage (46) par une conduite d'amenée avec plusieurs étranglements d'entrée parallèles, et reliant le cylindre de direction (32) à un raccord de retour par une conduite de retour avec plusieurs étranglements de retour, au moins un niveau des étranglements d'entrée étant en liaison permanente avec le cylindre de direction (32) en mode à direction assistée, et un autre niveau des étranglements d'entrée pouvant être relié à un raccord d'amenée (14) relié à une pompe d'alimentation (16) ou à un raccord d'évacuation (18) relié à un réservoir (20), au moyen d'une unité de commutation (58) commandable par le différentiel de pression en amont et en aval de la pompe de dosage (46),
**caractérisé**
**en ce qu'**une liaison fluidique (70) entre le manchon de commande (38) et l'unité de commutation (58) présente au moins une liaison de détente de pression (92) vers un raccord de réservoir (18).

2. Dispositif de direction hydraulique selon la revendication 1,
**caractérisé**
**en ce que** la liaison de détente de pression (92) est formée par une liaison entre un canal d'arrêt (61) du manchon de commande (38) et une fente d'évacuation (90) du piston de commande (40).

3. Dispositif de direction hydraulique selon la revendication 2,
**caractérisé**
**en ce que** le canal d'arrêt (61) présente un alésage (94) en liaison avec la fente d'évacuation (90) par une fente (96) du piston de commande (40).

4. Dispositif de direction hydraulique selon la revendication 3,
**caractérisé**
**en ce que** le dispositif de commutation (58) comprend des unités de réglage pneumatiques, électriques, électromagnétiques ou mécaniques.
